(19) Europäisches Patentamt

European Patent Office

Office européen des brevets

(11) EP 0 733 429 B1

(12) **EUROPÄISCHE PATENTSCHRIFT**

(45) Veröffentlichungstag und Bekanntmachung des Hinweises auf die Patenterteilung:
07.01.1999 Patentblatt 1999/01

(51) Int. Cl.⁶: **B23D 57/00**, B23D 59/00, B28D 5/04, B23Q 15/00

(21) Anmeldenummer: 96104480.7

(22) Anmeldetag: 21.03.1996

(54) **Drahtsäge und Verfahren zum Abtrennen von Scheiben von einem Werkstück**

Wire saw and method for cutting wafers from a workpiece

Scie à fil et procédé pour la coupe des plaquettes d'une pièce

(84) Benannte Vertragsstaaten:
CH DE FR GB IT LI

(30) Priorität: 23.03.1995 DE 19510625

(43) Veröffentlichungstag der Anmeldung:
25.09.1996 Patentblatt 1996/39

(73) Patentinhaber:
Wacker Siltronic
Gesellschaft für Halbleitermaterialien
Aktiengesellschaft
84489 Burghausen (DE)

(72) Erfinder: Egglhuber, Karl
84332 Hebertsfelden (DE)

(74) Vertreter:
Rimböck, Karl-Heinz, Dr. et al
c/o Wacker-Chemie GmbH
Zentralabteilung PML
Hans-Seidel-Platz 4
81737 München (DE)

(56) Entgegenhaltungen:
EP-A- 0 202 630           EP-A- 0 522 663
WO-A-91/12915          WO-A-94/29057
US-A- 4 991 475

• PATENT ABSTRACTS OF JAPAN vol. 016, no. 510 (M-1328), 21.Oktober 1992 & JP-A-04 189105 (TOKYO SEIMITSU CO LTD), 7.Juli 1992,

## Beschreibung

Gegenstand der Erfindung ist eine Drahtsäge zum Abtrennen von Scheiben von einem Werkstück, gemäß dem Oberbegriff des Patentanspruchs 1 und wie aus JP-01-177 963 bekannt. Eine derartige Drahtsäge wird insbesondere zum Abtrennen von Halbleiterscheiben von stab- oder blockförmigem Halbleitermaterial verwendet. Gegenstand der Erfindung ist auch ein Sägeverfahren, bei dem eine erfindungsgemäße Drahtsäge verwendet wird.

Drahtsägen der genannten Art sind bereits bekannt. Zu den wesentlichen Komponenten dieser Drahtsägen gehören ein Maschinenrahmen, eine Vorschubeinrichtung und ein zu einem Sägekopf zusammengefaßtes Rollensystem aus mehreren Drahtführungsrollen, die drehbar gelagert sind und von denen mindestens eine angetrieben ist. Das eigentliche Sägewerkzeug ist ein Gatter aus parallel ausgerichteten, bewegten Drahtabschnitten, die zwischen zwei der Drahtführungsrollen gespannt sind. Die Drahtabschnitte können zu einem einzigen, endlichen Draht gehören, der um das Rollensystem gewendelt ist und von einer Vorratsrolle auf eine Aufnahmerolle abgespult wird. In der Patentschrift US 4,655,191 ist hingegen eine Drahtsäge offenbart, bei der eine Vielzahl endlicher Drähte vorgesehen ist und jeder Drahtabschnitt des Drahtgatters einem dieser Drähte zugeordnet ist. Aus der EP-522 542 A1 ist auch eine Drahtsäge bekannt, bei der eine Vielzahl von endlosen Drahtschlaufen um das Rollensystem laufen.

Während des Sägevorgangs bewirkt die Vorschubeinrichtung eine gegeneinander gerichtete Relativbewegung der senkrecht zu den Drehachsen der Drahtführungsrollen in Führungsrillen laufenden Drahtabschnitte und des Werkstücks. Als Folge dieser Vorschubbewegung und der Zuführung eines materialabtragenden Sägehilfsmittels, das auch als "Slurry" bezeichnet wird, arbeiten sich die Drahtabschnitte unter Bildung von parallelen Sägespalten durch das Werkstück. Gemäß der DE-39 42 671 A1 sind sowohl Vorschubeinrichtungen bekannt, mit denen das Werkstück gegen das ruhende Drahtgatter geführt wird, als auch solche, mit denen der Sägekopf der Drahtsäge gegen das ruhende Werkstück geführt wird. Grundsätzlich können auch mehrere Drahtgatter einer Drahtsäge zum gleichzeitigen Bearbeiten mehrerer Werkstücke genutzt werden. In der Offenlegungsschrift EP-433 956 A1 ist beispielsweise eine Drahtsäge beschrieben, mit der zwei Werkstücke gleichzeitig gesägt werden können.

Die Herstellung von Halbleiterscheiben aus stab- oder blockförmigem Halbleitermaterial, beispielsweise aus Einkristallstäben, stellt besonders hohe Anforderungen an die Drahtsäge. Das Sägeverfahren hat in der Regel zum Ziel, daß jede gesägte Halbleiterscheibe Seitenflächen aufweist, die möglichst eben sind und sich parallel gegenüber liegen. Der sogenannte "warp" der Scheiben ist ein bekanntes Maß für die Abweichung der tatsächlichen Scheibenform von der angestrebten idealen Form. Der "warp" darf in der Regel höchstens wenige μm betragen. Jeder Drahtabschnitt des Drahtgatters sollte sich daher idealerweise zu jedem Zeitpunkt des Sägevorgangs in der für ihn vorgesehenen, ebenen Schneidfläche befinden. Die vorgesehenen Schneidflächen sind gedachte, parallel zueinander liegende Flächen, die das Werkstück durchqueren und zwischen denen sich die aus dem Werkstück zu trennenden Halbleiterscheiben befinden. Jede Bewegung der Drahtabschnitte quer zu den vorgesehenen Schneidflächen hat zur Folge, daß die Form (Geometrie) der hergestellten Halbleiterscheiben von der Zielvorgabe abweichen wird. Zu den Ursachen, die zu einer Fehllage der Drahtabschnitte in Bezug auf die vorgesehenen Schneidflächen führen, zählen vor allem beim Sägen auftretende Schneidkräfte, die die Drahtabschnitte aus der gewünschten Lage auslenken, axiale Verschiebungen der Drahtführungsrollen durch Wärmeausdehnung als Folge der Erwärmung des Antriebs der Drahtführungsrollen, der Lager der Drahtführungsrollen und der Drahtführungsrollen selbst, und Lagerspiele als Folge der Dauerbeanspruchung der Lager über Zeiträume von einigen Stunden für einen Sägevorgang. Eine Fehlerquelle stellt auch die Vorschubeinrichtung dar, falls die Vorschubführung nicht ausreichend präzise gefertigt ist oder Schneidkräfte den vorschubrahmen auffedern lassen. In beiden zuletzt genannten Fällen erfolgt eine quer zu den vorgesehenen Schneidflächen gerichtete Bewegung des Werkstücks, die de facto ebenfalls dazu führt, daß sich die Drahtabschnitte außerhalb der vorgesehenen Schneidflächen befinden.

Um Bewegungen des Werkstücks oder der Drahtabschnitte quer zu den vorgesehenen Schneidflächen auszuschließen, sind in der Regel der Maschinenrahmen und die tragenden Teile der Vorschubeinrichtung und des Sägekopfes als schwere und mechanisch stabile Teile ausgebildet, wobei zu deren thermischer Stabilisierung auch Temperiereinrichtungen vorgesehen sind. In der EP-552662 A1 und der darin Zitierten JP-01-177963 A sind Drahtsägen mit einem Kompensationssystem beschrieben, das Fehllagen der Drahtführungsrollen ermitteln und korrigieren soll.

Die Aufgabe der Erfindung besteht darin, eine Drahtsäge und ein Sägeverfahren anzugeben, mit denen insbesondere Halbleiterscheiben mit verbesserter geometrischer Qualität hergestellt werden können.

Die Aufgabe wird gelöst durch eine Drahtsäge und ein Verfahren gemäß der unabhängigen Patentansprüche 1 und 13.

Ein Grundgedanke der vorliegenden Erfindung ist, daß Bewegungen der Drahtabschnitte oder des Werkstücks, die zu Fehllagen der Drahtabschnitte in Bezug auf die vorgesehenen Schneidflächen führen, möglichst genau ermittelt und ausgeglichen werden.

Erfahrungsgemäß geraten die Drahtabschnitte besonders durch wärmebedingte, axiale Bewegungen der Lagerspindeln der Drahtführungsrollen des Drahtgatters oder der Drahtführungsrollen des Drahtgatters oder durch auftretende Lagerspiele aus den vorgesehenen Schneidflächen. Jede der Drahtführungsrollen des Drahtgatters ist auf einer Seite in einem Festlager und auf der gegenüberliegenden Seite in einem Loslager gelagert. Bei der Erwärmung einer Drahtführungsrolle dehnt sich diese ausgehend von der Seite des Festlagers zur Seite des Loslagers hin aus. Die Drahtabschnitte, die näher zum Festlager liegen, verlagern sich dabei weniger stark, als die näher zum Loslager liegenden Drahtabschnitte.

Um die Wärmeausdehung der Drahtführungsrolle möglichst gering zu halten, wird vorgeschlagen, die Drahtführungsrolle aus einem Material zu fertigen, dessen WärmeausdehnungsKoeffizient $\alpha <= 1.0*10^{-6} K^{-1}$, vorzugsweise $\alpha <= 0.1*10^{-6} K^{-1}$ ist ("<=" bedeutet "kleiner oder gleich"). Glaskeramische Werkstoffe, die diese Bedingung erfüllen, sind bevorzugt.

Wegen der permanenten Zuführung von "Slurry" und der daraus resultierenden Verschmutzung ist die direkte Beobachtung der Drahtabschnitte, beispielsweise durch eine seitlich zu den Drahtabschnitten angeordnete Meßeinrichtung, äußerst schwierig. Zudem würde die Maschinenrüstzeit beim Wechsel der Drahtführungsrollen, beispielsweise wegen der Umstellung der Drahtsäge auf eine andere Werkstückgröße, in unzulässiger Weise verlängert, weil die Meßvorrichtung jedesmal neu justiert werden müßte. Die Erfindung sieht deshalb eine Meßeinrichtung vor, bei der solche Probleme nicht auftreten.

Erfindungsgemäß werden Bewegungen der Drahtabschnitte quer zu den vorgesehenen Schneidflächen durch die Beobachtung axialer Lageveränderungen der Drahtführungsrollen des Drahtgatters oder ihrer Lagerspindeln festgestellt. Betrag und Richtung einer Lageveränderung wird über eine Abstandsmessung ermittelt. Besonders bevorzugt ist, die Lageveränderungen einer Drahtführungsrolle des Drahtgatters im wesentlichen in deren axialer Mitte festzustellen. Die Messung an dieser Stelle einer Drahtführungsrolle liefert einen sehr genauen, mittleren Wert für die Fehllage der Drahtabschnitte in Bezug auf die vorgesehenen Schneidflächen. Zu einer ähnlich genauen Abschätzung der Fehllage der Drahtabschnitte gelangt man durch die Beobachtung axialer Lageveränderungen von Orten auf der Achse der Drahtführungsrolle oder ihrer Lagerspindel, die sich auf Höhe oder nahezu auf Höhe des ersten und des letzten Drahtabschnittes des Drahtgatters befinden. Dazu wird die Lageveränderung eines Ortes auf Höhe des ersten und die Lageveränderung eines Ortes auf Höhe des letzten Drahtabschnittes der Drahtführungsrolle gemessen und gemittelt. Der resultierende Meßwert zeigt an, wie weit die Drahtabschnitte die vorgesehenen Schneidflächen durchschnittlich verlassen haben.

Da weder die axiale Mitte der Drahtführungsrollen des Drahtgatters noch Orte im Bereich des ersten und letzten Drahtabschnittes direkten Abstandsmessungen zugänglich sind, sieht die Erfindung vor, den von axialen Bewegungen der Drahtführungsrollen oder ihrer Lagerspindeln abhängigen Meßort auf die Oberfläche eines besonderen Meßelements zu verlegen. Dieses Meßelement, beispielsweise eine Meßscheibe oder eine Meßwelle, ist vorzugsweise aus einem Material gefertigt, dessen Wärmeausdehnungs-Koeffizient $\alpha <= 1.0*10^{-6} K^{-1}$, besonders bevorzugt $\alpha <= 0.1*10^{-6} K^{-1}$ ist. Ferner steht dieses Meßelement mit einem der genannten, bevorzugten Orte auf der Achse der Drahtführungsrolle oder deren Lagerspindel in Verbindung, so daß sich jede Lageveränderung dieses Ortes durch eine gleichnamige Lageveränderung des Meßorts bemerkbar macht. Dieser Meßort auf der Oberfläche des Meßelements, dessen räumliche Lage von Bewegungen der Drahtabschnitte quer zu den vorgesehenen Schneidflächen abhängig ist, muß für Abstandsmessungen gut zugänglich sein. Gemessen wird der Abstand von einer ortsfesten Meßeinrichtung zum Meßort. Die Meßeinrichtung befindet sich vorzugsweise am Maschinenrahmen oder ist mit diesem verbunden. Als Meßeinrichtungen eignen sich bekannte, nach einem optischen, hydraulischen, pneumatischen, kapazitiven oder induktiven Meßprinzip arbeitende Vorrichtungen zur Abstandsmessung. Das Erfordernis der guten Zugänglichkeit des Meßorts kann beispielsweise dadurch erfüllt sein, daß sich das Meßelement bis nahe zum Meßkopf der Meßeinrichtung erstreckt. Je nach verwendeten Meßprinzip kann auch eine Meßeinrichtung mit einem langgestreckten Meßkopf, beispielsweise ein Meßstab vorgesehen sein, der bis nahe an den Meßort herangeführt ist und an dessen Spitze sich der den Abstand messende Sensor befindet. Der Meßstab, der vorzugsweise ebenfalls aus einem Material gefertigt ist, dessen Wärmeausdehnungs-Koeffizient $\alpha <= 1.0*10^{-6} K^{-1}$, besonders bevorzugt $\alpha <= 0.1*10^{-6} K^{-1}$ beträgt, ist allerdings nicht unbedingt erforderlich und kann beispielsweise weggelassen werden, wenn die Abstandsmessung nach einem optischen Meßprinzip erfolgt.

Bewegungen des Werkstücks quer zu den vorgesehenen Schneidflächen werden durch Messungen des Abstands von einer Meßeinrichtung zu einem Meßort ermittelt, dessen räumliche Lage von entsprechenden Bewegungen des Werkstücks abhängig ist. Der Meßort befindet sich vorzugsweise am Werkstück, der Werkstückhalterung, beispielsweise am Vorschubgehäuse, oder an Meßelementen, die mit dem Werkstück oder der Werkstückhalterung verbunden sind. Meßelemente sind vorzugsweise aus einem Material gefertigt, dessen Wärmeausdehnungs-Koeffizient $\alpha <= 1.0*10^{-6} K^{-1}$, besonders bevorzugt $\alpha <= 0.1*10^{-6} K^{-1}$ ist. Da nach einer Auslenkbewegung des Werkstücks die Lage des Werkstücks in Bezug auf die Drahtabschnitte verändert ist, resultiert aus dieser Bewegung de facto auch eine Fehllage der Drahtabschnitte in Bezug auf die vorgesehenen Schneidflächen. Der Betrag der Fehllage der Drahtabschnitte entspricht dem Betrag der gemessenen Abstandsänderung vor und nach der Bewegung des Werkstücks. Als Meßeinrichtungen eignen sich neben den, im Zusammenhang mit der Überwachung von Bewegungen der Drahtabschnitte genannten Meßeinrichtungen, auch Meßeinrichtungen, die durch mechanisches Abtasten den Abstand zum Meßort ermitteln.

Die Drahtsäge kann mit einer oder mit mehreren Meßeinrichtungen ausgestattet sein. Bevorzugt ist, mindestens eine Meßeinrichtung zur Ermittlung von Bewegungen des Werkstücks und für jedes als Sägewerkzeug eingesetztes Drahtgatter mindestens eine Meßeinrichtung je Drahtführungsrolle zur Ermittlung von Bewegungen der Drahtabschnitte bereitzustellen.

Jede Abweichung des von einer Meßeinrichtung ermittelten Abstands von einem Sollabstand zeigt eine Fehllage der Drahtabschnitte in Bezug auf die vorgesehenen Schneidflächen an. Der Sollabstand ist der Abstand, der gemessen wird, wenn sich die Drahtabschnitte in den vorgesehenen Schneidflächen befinden. Festgestellte Abweichungen des gemessenen Abstands vom Sollabstand werden an eine Stelleinrichtung übermittelt, die eine Ausgleichsbewegung der Drahtabschnitte oder des Werkstücks herbeiführt. Durch die Ausgleichsbewegung werden die Drahtabschnitte in die vorgesehenen Schneidflächen gebracht. Geeignete Stelleinrichtungen sind bekannt und umfassen beispielsweise piezoelektrische Translatoren, Thermostäbe und hydraulisch, pneumatisch, magnetisch oder mechanisch arbeitende Stellgetriebe. Die Stelleinrichtung ist je nach Ausführungsform der Drahtsäge so angeordnet, daß damit eine axiale Kraft auf das Werkstück, auf das Gehäuse der Vorschubeinrichtung, auf eine Drahtführungsrolle des Drahtgatters oder auf den Sägekopf ausgeübt werden kann. Die Drahtsäge kann mit einer oder mit mehreren Stelleinrichtungen ausgestattet sein. Zweckmäßigerweise werden die eingesetzten Meß- und Stelleinrichtungen mit Hilfe einer Rechnersteuerung betrieben, die die Meßdaten periodisch auswertet und nötigenfalls die Stelleinrichtungen ansteuert.

In einer bevorzugten Ausführungsform wird für jede Drahtführungsrolle eines als Sägewerkzeug eingesetzten Drahtgatters eine Stelleinrichtung bereitgestellt, so daß jede der Drahtführungsrollen unabhängig von der anderen Drahtführungsrolle zu einer Ausgleichsbewegung veranlaßt werden kann. Der Sägekopf muß dabei nicht mitbewegt werden. Bei anderen Ausführungsformen ist nur eine Stelleinrichtung vorgesehen, mit der eine Ausgleichsbewegung des Werkstücks, des Gehäuses der Vorschubeinrichtung oder des Sägekopfes herbeigeführt werden kann.

Zu Beginn des Sägeverfahrens, noch bevor die Drahtabschnitte in das Werkstück eindringen, kann das Nachführungssystem verwendet werden, um durch die Ausgleichsbewegung einer Drahtführungsrolle des Drahtgatters oder durch gegensinnige Ausgleichsbewegungen beider Drahtführungsrollen des Drahtgatters eine bestimmte Orientierung der Drahtabschnitte in Bezug auf das Werkstück herbeizuführen. Dies ist beispielsweise von großem Nutzen, wenn das Werkstück ein Kristallstab aus Halbleitermaterial ist und die vorgesehenen Schneidflächen das Kristallgitter in einem bestimmten Winkel kreuzen sollen. Damit die jeweilige Stelleinrichtung die erforderliche Ausgleichsbewegung der Drahtführungsrolle veranlassen kann, muß ein Sollabstand vorgegeben werden, der der gewünschten Orientierung der Drahtabschnitte entspricht.

Neben dem bereits genannten Ziel des Sägeverfahrens, Scheiben mit möglichst ebenen und parallelen Seitenflächen zu erhalten, kann das Ziel auch darin bestehen, Scheiben mit parallelen Seitenflächen herzustellen, deren Profil jedoch nicht gerade ist, sondern in einer vorbestimmten Weise von einer Geraden abweicht, beispielsweise gebogen, gewellt oder gestuft erscheint. Das Nachführungssystem der Drahtsäge ermöglicht es, daß auch solche besonders geformten Scheiben mit hoher Präzision hergestellt werden können. Dazu wird während des Sägevorgangs der Sollabstand absichtlich in der Weise geändert, daß die Stelleinrichtung das Werkstück oder die Drahtabschnitte zu einer Ausgleichsbewegung veranlaßt, die die Drahtabschnitte in die vorgesehenen, in diesem Fall nicht-ebenen Schneidflächen bringt.

Das Nachführungssystem kann am Ende eines Sägevorgangs, nachdem die Vorschubbewegung beendet ist, dazu verwendet werden, um die Drahtabschnitte zu einer seitwärts gerichteten Bewegung zu veranlassen. Dies ist sinnvoll, wenn die Drahtabschnitte bereits in die Leiste der Werkstückhalterung eingedrungen sind, auf der das Werkstück fixiert war. Durch die Seitwärtsbewegung, die mindestens der Weglänge zwischen zwei Drahtabschnitten entsprechen muß, werden die Scheiben von dem Rest der Werkstückhalterung abgetrennt. Die losen Scheiben können dann von einer bereitgestellten Transporthorde aufgenommen werden.

Ein weiterer Vorteil des Nachführungssystems besteht darin, daß sich Lagerspiele, die durch Abnutzung der Lagerspindeln auftreten, frühzeitig erkennen und beheben lassen.

Nachfolgend wird die Erfindung an Hand von Figuren näher beschrieben. Gleiche Bezugsziffern bezeichnen gleichartige Vorrichtungsmerkmale. Es sind nur die zum Verständnis der Erfindung notwendigen Merkmale dargestellt.

Es zeigen:

die Figur 1 die schematische Darstellung eines Rollensystems mit vier Drahtführungsrollen;
die Figuren 2 bis 4 in teilweise geschnittener Seitenansicht bevorzugte Ausführungsformen erfindungsgemäßer Drahtsägen mit einem Rollensystem gemäß Fig.1;
die Figur 2a einen vergrößerten Ausschnitt aus Figur 2.

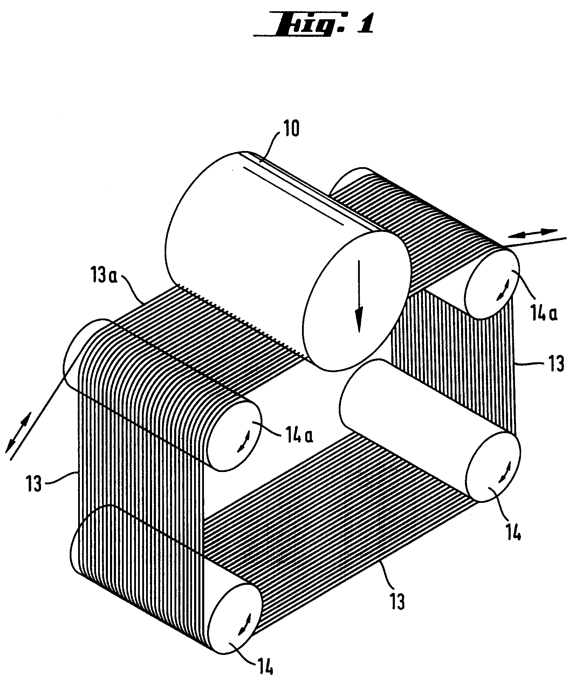

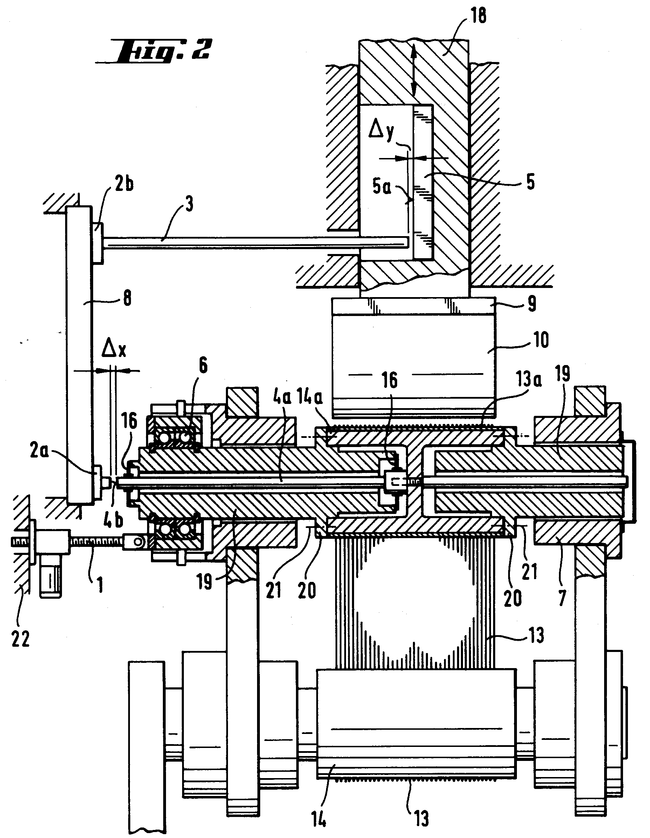

Das in Figur 1 dargestellte Rollensystem besteht aus vier Drahtführungsrollen 14, um die ein endlicher Draht gewendelt ist. Zwischen je zwei Drahtführungsrollen befindet sich ein Drahtgatter 13, das von einer Vielzahl von parallel angeordneten Drahtabschnitten gebildet wird. Mit einem Pfeil ist angedeutet, daß ein stabförmiges Werkstück 10 gegen ein als Sägewerkzeug verwendetes Drahtgatter 13a bewegt wird. Die Drahtführungsrollen dieses Drahtgatters sind mit der Bezugsziffer 14a versehen.

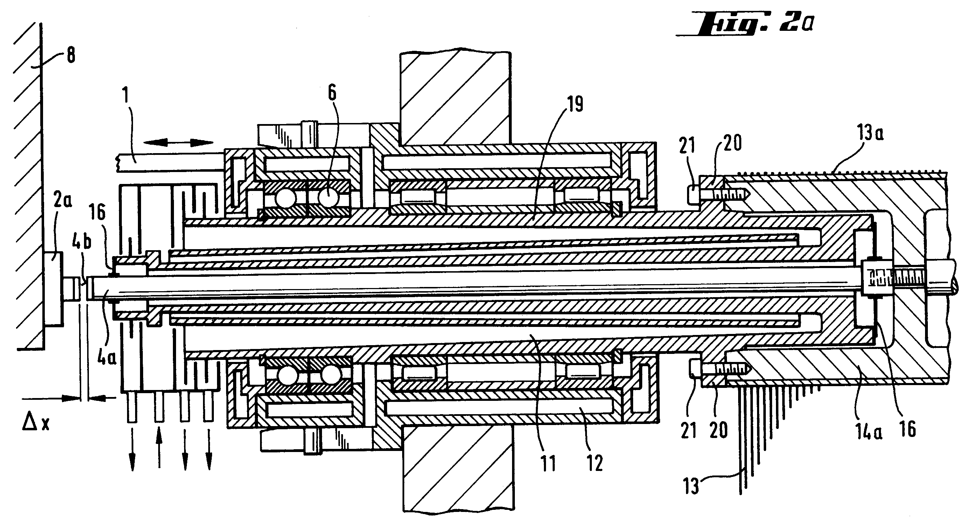

Jede der in den Figuren 2 bis 4 dargestellten Drahtsägen ist mit einem Rollensystem gemäß Fig.1 ausgestattet. Ferner besitzt jede Drahtsäge eine Vorschubeinrichtung 18, mit der das am Vorschubtisch 9 befestigte Werkstück 10 in einer abwärts gerichteten Vorschubbewegung gegen das Drahtgatter 13a des Rollensystems bewegt wird. In der Seitenansicht ist jeweils nur eine Drahtführungsrolle 14a des Drahtgatters sichtbar. Alle nachfolgenden Beschreibungen im Zusammenhang mit dieser Drahtführungsrolle gelten in entsprechender Weise auch für die davorliegende, zweite Drahtführungsrolle des Drahtgatters. Die Drahtführungsrolle 14a ist zwischen einem Festlager 6 und einem Loslager 7 gelagert. Die Verbindung der Drahtführungsrolle zu den Lagern erfolgt über Lagerspindeln 19. Bei dem Festlager 6 handelt es sich vorzugsweise um vorgespannte Axiallager, beispielsweise mit Federn vorgespannte Wälzlager, oder um hydrostatische Lager. Axiale Bewegungen der Drahtführungsrolle 14a quer zu den vorgesehenen Schneidflächen werden von einer Meßeinrichtung 2a überwacht, die sich auf einer Referenzplatte 8 befindet. Die Referenzplatte 8 ist am Maschinenrahmen befestigt und besteht vorzugsweise aus einem Material mit geringem Wärmeausdehnungs-Koeffizienten. Oberhalb der Meßeinrichtung 2a ist eine weitere Meßeinrichtung 2b auf der Referenzplatte 8 befestigt. Die gemeinsame Befestigung auf der Referenzplatte stellt sicher, daß die mit den Meßeinrichtungen 2a und 2b durchgeführten Abstandsmessungen ausschließlich Bewegungen des Werkstücks und/oder der Drahtabschnitte quer zu den vorgesehenen Schneidflächen offenlegen. Der Meßkopf der Meßeinrichtung 2b ist als langgestreckter Meßstab 3 ausgebildet, der sich seitwärts bis nahe zur Meßschiene 5 erstreckt und an dessen Spitze sich der in den Figuren nicht dargestellte Sensor zur Abstandsmessung befindet. Die Meßschiene 5 ist parallel zur Vorschubführung an der mit dem Werkstück 10 bewegten Vorschubeinrichtung 18 befestigt. Der Meßort zur Ermittlung einer Fehllage der Drahtabschnitte befindet sich auf der Seitenfläche 5a der Meßschiene 5.

Zunächst wird die Ausführungsform gemäß Figur 2 näher erläutert. Die Drahtführungsrolle 14a ist mittels Flanschen 20 und Schrauben 21 mit den Lagerspindeln 19 verbunden. Ferner ist die Drahtführungsrolle in ihrer axialen Mitte mit einer zur Meßeinrichtung 2a gerichteten Meßwelle 4a verbunden. Die als Meßelement verwendete Meßwelle ist durch axial elastische Führungselemente 16 in der hohlen Lagerspindel 19 zentriert und gegen Verdrehen gesichert. Auf der zur Meßeinrichtung zeigenden Stirnseite 4b der Meßwelle 4a befindet sich der Meßort zur Ermittlung einer Fehllage der Drahtabschnitte des Drahtgatters. In Figur 2a ist das Festlager 6 mit der Lagerspindel 19 vergrößert dargestellt. In der Lagerspindel sind Kühlkanäle 11 vorgesehen, durch die ein Kühlmittel strömt, das eine effektive Innenkühlung der Lagerspindel und zum Teil auch der Drahtführungsrolle gewährleistet. Die Kühlkanäle 11 haben vorzugsweise eine konische Form, die bewirkt, daß das Kühlmittel infolge der Drehbewegung der Drahtführungsrolle durch die Kühlkanäle gespült wird. Zur äußeren Kühlung der Lagerspindel sind lagerseitig weitere, von Kühlmittel durchströmte Kühlkanäle 12 vorhanden.

Weicht der von der Meßeinrichtung 2a gemessene Abstand zur Stirnseite 4b der Meßwelle 4a von einem Sollabstand ab, wird die Stelleinrichtung 1, die am Maschinenrahmen 22 abgestützt ist, eine Ausgleichsbewegung der Drahtführungsrolle 14a herbeiführen. Sind die vorgesehenen Schneidflächen eben, ist der zu Beginn des Sägevorgangs gewählte Abstand zum Meßort zugleich der anfängliche Sollabstand. Ergibt die Abstandsmessung mit der Meßeinrichtung 2a während des Sägevorgangs eine Abweichung zum Sollabstand vom Betrag $\Delta x$, wird die Stelleinrichtung eine Kraft in das Festlager 6 einleiten, die auf die Drahtführungsrolle 14a übertragen und eine Verschiebung der Drahtführungsrolle um den Betrag $-\Delta x$ herbeiführen wird. Dieser Vorgang geschieht ohne Auswirkungen auf die Lage der übrigen Drahtführungsrollen oder des Sägekopfs. Nach der Ausgleichsbewegung der Drahtführungsrolle wird die Abstandsmessung wieder den Sollabstand ergeben.

Weist andererseits die Abstandsmessung mit der Meßeinrichtung 2b auf eine Bewegung des Werkstücks quer zu den vorgesehenen Schneidflächen hin, weil eine Abweichung vom Sollabstand vom Betrag $\Delta y$ festgestellt wird, werden die Stelleinrichtungen 1 beider Drahtführungsrollen 14a aktiv und führen durch eine entsprechende Kraftübertragung eine Verschiebung jeder Drahtführungsrolle 14a vom Betrag $\Delta y$ herbei. Die nach der Ausgleichsbewegung mit den Meßeinrichtungen 2a und 2b gemessenen Abstände nimmt die Rechnersteuerung als neue Sollabstände auf, an denen sich die nachfolgenden Abstandsmessungen orientieren.

Statt zweier Stelleinrichtungen, durch die jede Drahtführungsrolle 14a individuell axial verschoben wird, kann auch nur eine Stelleinrichtung vorgesehen sein, mit der der gesamte Sägekopf bewegt wird. In diesem Fall werden die durch die Meßeinrichtungen 2a festgestellten Abweichungen vom jeweiligen Sollabstand gemittelt und der Mittelwert als Grundlage für eine mögliche Aktion der Stelleinrichtung verwendet.

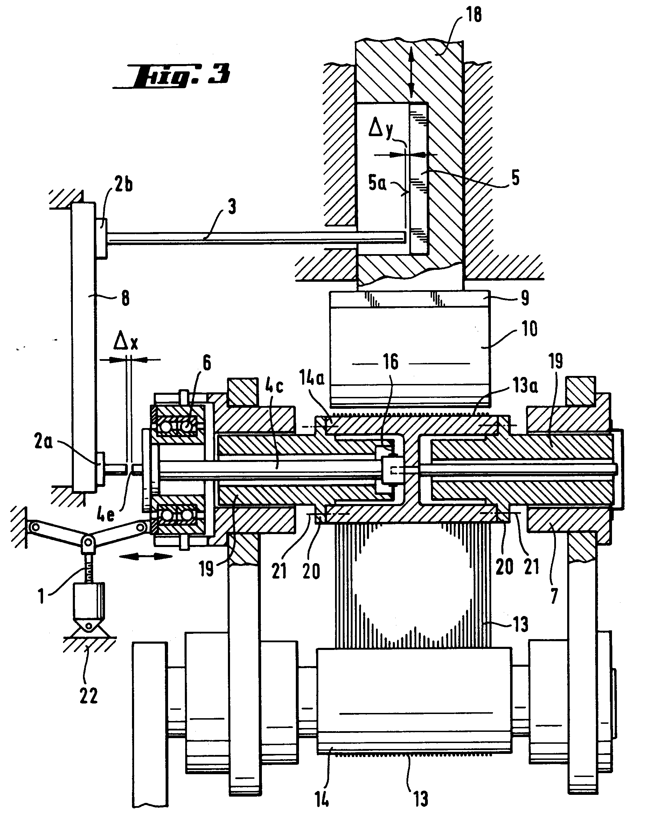

Bei der in Figur 3 dargestellten Ausführungsform ist als Meßelement eine Meßwelle 4c vorgesehen, die mit der Drahtführungsrolle 14a in deren axialer Mitte verbunden und im Festlager 6 fixiert ist. Der Meßort befindet sich auf der zur Meßeinrichtung 2a weisenden Stirnfläche 4e der Meßwelle. Die Meßwelle 4c ist durch ein axial elastisches Halteelement 16 in der hohlen Lagerspindel zentriert. Die Stelleinrichtung 1, die als mechanisch arbeitendes Stellgetriebe dargestellt ist, überträgt nach einer festgestellten Abstandsabweichung eine Kraft über das Festlager 6 und die Meßwelle 4c auf die Drahtführungsrolle 14a, wodurch die Drahtführungsrolle zu einer axialen Ausgleichsbewegung veranlaßt wird. Die Reaktion auf eine festgestellte Abweichung des Abstands vom Betrag $\Delta x$ oder $\Delta y$, erfolgt in derselben Weise, wie es oben im Zusammenhang mit der Ausführungsform gemäß Fig.2 beschrieben wurde.

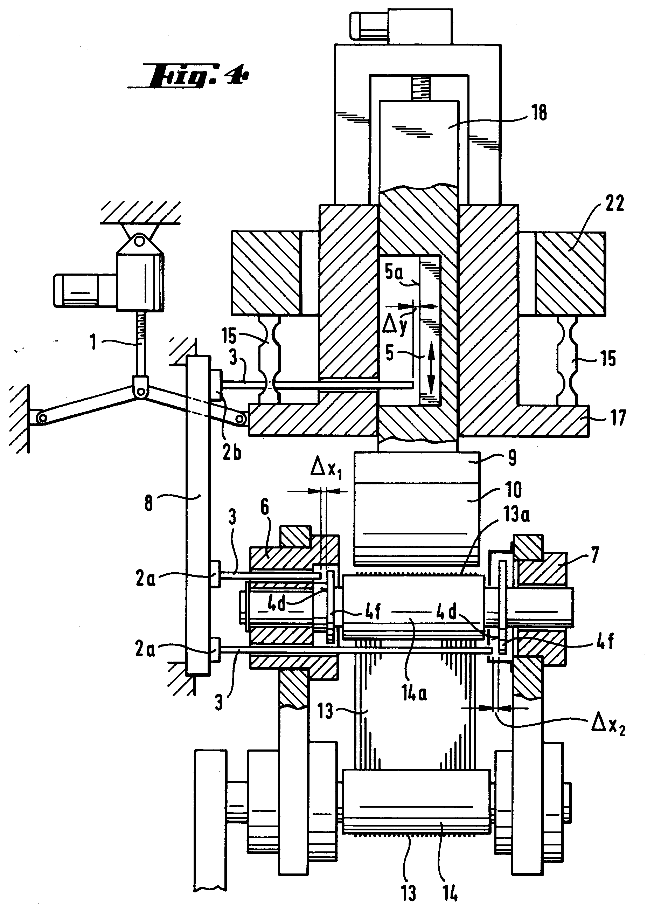

Eine weitere Ausführungsform der Erfindung ist in Figur 4 gezeigt. Bei dieser Ausführungsform sind an jeder Seite der Drahtführungsrolle 14a in unmittelbarer Nähe des ersten und letzten Drahtabschnitts des Drahtgatters zwei Meßscheiben 4f als Meßelemente vorgesehen. Jede Meßscheibe kann Bestandteil der Lagerspindel sein oder als selbstständiges Bauelement zwischen der Lagerspindel und der Drahtführungsrolle fixiert sein. Die Meßscheiben können aus einem Material mit geringem Wärmeausdehnungs-Koeffizienten gefertigt sein oder aus Metall bestehen oder mit Metall beschichtet sein. Wegen der vergleichsweise geringen Dicke der Meßscheiben wird das Ergebnis der Abstandsmessung durch wärmebedingte Längenausdehnungen der Meßscheiben in axialer Richtung praktisch nicht beeinträchtigt. Zu jeder Meßscheibe 4f gehört eine auf der Bezugsplatte 8 befestigte Meßeinrichtung 2a. Auf den zu den Meßeinrichtungen weisenden Seitenflächen 4d der Meßscheiben befindet sich der Meßort für die Abstandsmessungen. Der Meßkopf der Meßeinrichtungen ist als langgestreckter Meßstab 3 ausgebildet, der bis nahe an Seitenflächen 4d heranreicht. Die gezeigte Ausführungsform ist ferner mit einer Stelleinrichtung 1 ausgerüstet, die Bewegungen des Werkstücks herbeiführen kann. Die Krafteinleitung durch die Stelleinrichtung erfolgt auf das Gehäuse 17 der Vorschubeinrichtung 18. Dieses Gehäuse 17 wird von elastischen Halteelementen 15 am Maschinenrahmen 22 gehalten. Statt der Halteelemente 15 können auch Linearführungen vorgesehen sein, entlang derer sich das Vorschubgehäuse mit dem Werkstück bewegen läßt.

Die Messung von axialen Bewegungen der Drahtführungsrolle erfolgt bei dieser Ausführungsform annähernd in Höhe des ersten und letzten Drahtabschnitts. Die von den Meßeinrichtungen 2a festgestellten Abweichungen $\Delta x_1$ und $\Delta x_2$ (der Drahtführungsrolle 14a) und $\Delta x_3$ und $\Delta x_4$ (der nicht sichtbaren, gegenüberliegenden Drahtführungsrolle 14a) vom jeweiligen Sollabstand müssen nicht notwendigerweise exakt übereinstimmen. Sie werden zu einem Mittelwert

$\Delta x = (\Delta x_1 + \Delta x_2 + \Delta x_3 + \Delta x_4)/4$ zusammengefaßt. Auf eine festgestellte Abweichung vom Betrag $\Delta x$ wird die Stelleinrichtung das Gehäuse der Vorschubeinrichtung ebenfalls um den Betrag $\Delta x$ verschieben. Die nach der Verschiebung von den Meßeinrichtungen 2a und 2b ermittelten Abstände werden als neue Sollabstände in nachfolgenden Meßzyklen zu Grunde gelegt. Tritt bei der Messung mit der Meßeinrichtung 2b eine Abweichung vom Betrag $\Delta y$ auf, wird die Stelleinrichtung eine Ausgleichsbewegung des Gehäuses der Vorschubeinrichtung um den Betrag $-\Delta y$ herbeiführen, so daß der ursprüngliche Sollabstand wieder erreicht wird.

Es können zusätzlich zwei Stelleinrichtungen vorgesehen sein, mit denen jeweils axiale Bewegungen der Drahtführungsrollen veranlaßt werden können. In diesem Fall wird beim Auftreten einer Abweichung vom Betrag $\Delta x = (\Delta x_1 + \Delta x_2)/2$ (oder $\Delta x = (\Delta x_3 + \Delta x_4)/2$) eine Ausgleichsbewegung herbeigeführt, durch die die jeweilige Drahtführungsrolle 14a des Drahtgatters um den Betrag $-\Delta x$ verschoben wird.

Die in den Figuren 2 bis 4 dargestellten Ausführungsformen sind als Beispiele anzusehen, durch die der Erfindungsgegenstand nicht eingeschränkt wird. So kann bei Drahtsägen, die unter die Erfindung fallen, insbesondere die Zahl der verwendeten Drahtführungsrollen und der als Sägewerkzeug verwendeten Drahtgatter variiert sein. Statt einer das Werkstück bewegenden Vorschubeinrichtung kann auch eine den Sägekopf bewegende Vorschubeinrichtung realisiert sein.

## Patentansprüche

1. Drahtsäge zum Abtrennen von Scheiben von einem Werkstück (10) mit einem Maschinenrahmen (22), einer Vorschubeinrichtung (18), einem zu einem Sägekopf zusammengefaßten Rollensystem aus mehreren Drahtführungsrollen (14, 14a), die mit Lagerspindeln (19) verbunden und drehbar gelagert sind und von denen mindestens eine angetrieben ist, mindestens einem als Sägewerkzeug eingesetzten Drahtgatter (13a) aus parallel zwischen zwei Drahtführungsrollen (14a) angeordneten Drahtabschnitten, die senkrecht zu den Achsen der Drahtführungsrollen um das Rollensystem bewegt werden und sich mit Hilfe der Vorschubeinrichtung (18), unter Zuführung von abtragenden Mitteln und unter Ausbildung einer Vielzahl paralleler Sägespalten, entlang vorgesehener Schneidflächen durch das Werkstück (10) arbeiten, und einem Nachführungssystem zur Nachführung der Drahtabschnitte in die vorgesehenen Schneidflächen mit mindestens einer Meßeinrichtung (2a) und mindestens einer Stelleinrichtung (1), wobei die Meßeinrichtung (2a) eine Fehllage der Drahtabschnitte in Bezug auf die vorgesehenen Schneidflächen durch Messungen des Abstands zu einem Meßort ermittelt, dessen räumliche Lage von der Fehllage der Drahtabschnitte abhängig ist, und die Stelleinrichtung (1) mittels Kraftübertragung eine Ausgleichsbewegung der Drahtabschnitte oder des Werkstücks herbeiführt, durch die die Drahtabschnitte in die vorgesehenen Schneidflächen gebracht werden, dadurch gekennzeichnet daß sich der Meßort auf der Oberfläche eines Meßelements befindet, das entweder in der axialen Mitte oder axial möglichst nahe auf Höhe des ersten und letzten Drahtabschnittes einer Drahtführungsrolle (14a) des Drahtgatters (13a) befestigt ist.

2. Drahtsäge nach Anspruch 1, gekennzeichnet durch eine in der hohlen Lagerspindel (19) mittels elastischer Führungselemente (16) zentrierte Meßwelle (4a) als Meßelement, die an der Drahtführungsrolle (14a) des Drahtgatters (13a) in deren axialer Mitte befestigt ist und deren zur Meßeinrichtung weisende Stirnseite (4b) den Meßort bildet.

3. Drahtsäge nach Anspruch 1, gekennzeichnet durch eine in der hohlen Lagerspindel (19) zentrierte Meßwelle (4c) als Meßelement, die an der Drahtführungsrolle (14a) des Drahtgatters (13a) in deren axialer Mitte befestigt und an einem Festlager (6) fixiert ist und deren zur Meßeinrichtung (2a) weisende Stirnseite (4e) den Meßort bildet.

4. Drahtsäge nach Anspruch 1, gekennzeichnet durch Meßscheiben (4f) als Meßelement, die zwischen der Drahtführungsrolle (14a) und den benachbarten Lagerspindeln möglichst nahe auf Höhe des ersten und letzten Drahtabschnitts des Drahtgatters (13a) fixiert sind und deren zur Meßeinrichtung (2a) weisende Seitenflächen (4d) den Meßort bilden.

5. Drahtsäge nach einem der Ansprüche 1 bis 4, gekennzeichnet durch ein zusätzliches Meßelement, das als Meßschiene (5) ausgebildet ist und parallel zur Vorschubführung der Vorschubeinrichtung (18) angeordnet ist und deren zu einer zusätzlichen Meßeinrichtung (2b) weisende Seitenfläche (5a) einen zusätzlichen Meßort bildet.

6. Drahtsäge nach einem der Ansprüche 1 bis 5, gekennzeichnet durch eine Meßeinrichtung, die aus einer Gruppe von Vorrichtungen zur Abstandsmessung ausgewählt ist, die nach einem mechanischen, optischen, hydraulischen, pneumatischen, kapazitiven oder induktiven Meßprinzip arbeiten.

7. Drahtsäge nach einem der Ansprüche 1 bis 6, gekennzeichnet durch eine Stelleinrichtung (1), die aus einer Gruppe ausgewählt ist, die piezoelektrische Translatoren, Thermostäbe und hydraulisch, pneumatisch, magnetisch oder mechanisch arbeitende Stellgetriebe umfaßt.

8. Drahtsäge nach einem der Ansprüche 1 bis 7, gekennzeichnet durch Lagerspindeln (19) mit konisch verjüngt ausgebildeten Kanälen (11) zur Innenkühlung der Lagerspindeln und der Drahtführungsrollen (14a) des Drahtgatters (13a).

9. Drahtsäge nach einem der Ansprüche 1 bis 8, dadurch gekennzeichnet, daß die Drahtführungsrollen (14a) des Drahtgatters (13a) axial bewegbar gelagert sind.

10. Drahtsäge nach einem der Ansprüche 1 bis 9, gekennzeichnet durch einen Sägekopf, der quer zu den vorgesehenen Schneidflächen bewegbar gelagert ist.

11. Drahtsäge nach einem der Ansprüche 1 bis 10, gekennzeichnet durch mehrere Drahtgatter (13a) zur gleichzeitigen Bearbeitung mehrerer Werkstücke.

12. Drahtsäge nach einem der Ansprüche 1 bis 11, dadurch gekennzeichnet, daß das Meßelement und gegebenenfalls die Drahtführungsrollen (14a) des Drahtgatters (13a) aus einem Werkstoff gefertigt sind, dessen Wärmeausdehnungs-Koeffizient $\alpha \leq 1.0*10^{-6}\ K^{-1}$, insbesondere $\alpha \leq 0.1*10^{-6}\ K^{-1}$ ist.

13. Verfahren zum Abtrennen von Scheiben von einem Werkstück (10) mit Hilfe einer Drahtsäge mit einem Maschinenrahmen (22), einer Vorschubeinrichtung (18), einem zu einem Sägekopf zusammengefaßten Rollensystem aus mehreren Drahtführungsrollen (14, 14a), mindestens einem als Sägewerkzeug eingesetzten Drahtgatter (13a) aus parallel zwischen zwei Drahtführungsrollen angeordneten Drahtabschnitten und einem Nachführungssystem zur Nachführung der Drahtabschnitte in vorgesehene Schneidflächen, bei dem eine Fehllage von Drahtabschnitten in Bezug auf die vorgesehenen Schneidflächen mit Hilfe einer Meßeinrichtung ermittelt wird, indem der Abstand zu einem Meßort gemessen wird, dessen räumliche Lage von der Fehllage der Drahtabschnitte abhängig ist, und im Fall einer Abweichung des gemessenen Abstands von einem Sollabstand mit Hilfe einer Stelleinrichtung (1) mittels Kraftübertragung eine Ausgleichsbewegung der Drahtabschnitte oder des Werkstücks (10) herbeigeführt wird, die die Drahtabschnitte in die vorgesehenen Schneidflächen bringt, dadurch gekennzeichnet, daß der Abstand zu einem Meßort gemessen wird, der sich auf der Oberfläche eines Meßelements befindet, das entweder in der axialen Mitte oder axial möglichst nahe auf Höhe des ersten und letzten Drahtabschnittes einer Drahtführungsrolle des Drahtgatters befestigt ist.

14. Verfahren nach Anspruch 13, dadurch gekennzeichnet, daß eine Ausgleichsbewegung des Werkstücks (10) durch Kraftübertragung von der Stelleinrichtung (1) auf das Werkstück (10) herbeigeführt wird.

15. Verfahren nach Anspruch 13, dadurch gekennzeichnet, daß eine Ausgleichsbewegung des Werkstücks (10) durch Kraftübertragung von der Stelleinrichtung (1) auf ein Gehäuse (17) der Vorschubeinrichtung (18) herbeigeführt wird.

16. Verfahren nach einem der Ansprüche 13 bis 15, dadurch gekennzeichnet, daß eine Ausgleichsbewegung der Drahtabschnitte durch Kraftübertragung von der Stelleinrichtung (1) auf die Drahtführungsrolle (14a) des Drahtgatters (13a) herbeigeführt wird.

17. Verfahren nach einem der Ansprüche 13 bis 15, dadurch gekennzeichnet, daß eine Ausgleichsbewegung der Drahtabschnitte durch Kraftübertragung von der Stelleinrichtung (1) auf den Sägekopf herbeigeführt wird.

18. Verfahren nach einem der Ansprüche 13 bis 17, dadurch gekennzeichnet, daß vor Beginn des Abtrennens der Scheiben vom Werkstück (10) eine Ausgleichsbewegung der Drahtabschnitte herbeigeführt wird und die Drahtabschnitte dadurch eine bestimmte Orientierung relativ zum Werkstück erhalten.

19. Verfahren nach einem der Ansprüche 13 bis 18, dadurch gekennzeichnet, daß der Sollabstand während des Abtrennens der Scheiben vom Werkstück nach einem vorbestimmten Programm verändert wird.

20. Verfahren nach einem der Ansprüche 13 bis 19, dadurch gekennzeichnet, daß nach dem Abtrennen der Scheiben vom Werkstück eine Vorschubbewegung beendet und eine Ausgleichsbewegung der Drahtabschnitte herbeigeführt wird, deren Länge mindestens dem Abstand zwischen zwei Drahtabschnitten des Drahtgatters (13a) entspricht und die seitwärts gerichtet ist.

21. Verfahren nach einem der Ansprüche 13 bis 20, dadurch gekennzeichnet, daß das Nachführungssystem zur frühzeitigen Erkennung von Lagerspielen verwendet wird.

## Claims

1. Wire saw for cutting wafers from a workpiece having a machine frame (22), a feed device (18), a roller system combined to form a cutting head and comprising a plurality of wire guide rollers (14, 14a) which are linked to bearing spindles (19) and are rotatably mounted and of which at least one is driven, at least one wire web (13a) used as sawing tool and comprising wire segments which are disposed in parallel between two wire guide rollers (14a) and which are moved perpendicularly to the axes of the wire guide rollers around the roller system and which work through the workpiece (10) along intended cutting planes with the aid of the feed device (18), with eroding means being supplied and with the formation of a multiplicity of parallel sawing gaps, and having a guidance system for the guidance of the wire segments into the intended cutting planes having at least one measuring device (2a) and at least one controlling device (1), the measuring device (2a) detecting an incorrect position of the wire segments in relation to the intended cutting planes by measuring the distance from a measurement point whose spatial position is dependent on the incorrect position of the wire segments, and the controlling device (1) effecting a compensating movement of the wire segments or of the workpiece by means of force transmission, which compensating movement brings the wire segments into the intended cutting planes, characterized in that the measurement point is situated on the surface of a measuring element which is mounted either in the axial centre or axially as closely in line with the first and last wire segment of a wire guide roller (14a) of the wire web (13a) as possible.

2. Wire saw according to Claim 1, characterized by, as measuring element, a measuring shaft (4a) which is centred in the hollow bearing spindle (19) by means of elastic guide elements (16) and which is mounted on the wire guide roller (14) of the wire web (13a) in its axial centre and whose end side (4b) pointing toward the measuring device forms the measurement point.

3. Wire saw according to Claim 1, characterized by, as measuring element, a measuring shaft (4c) which is centred in the hollow bearing spindle (19) and which is mounted on the wire guide roller (14a) of the wire web (13a) in its axial centre and is fixed to a fixed bearing (6) and whose end side (4c) pointing toward the measuring device (2a) forms the measurement point.

4. Wire saw according to Claim 1 characterized by, as measuring element, measuring discs (4f) which are fixed between the wire guide roller (14a) and the adjacent bearing spindles as closely in line with the first and last wire segment of the wire web (13a) as possible and whose side surfaces (4d) pointing toward the measuring device (2a) form the measurement point.

5. Wire saw according to any of Claims 1 to 4, characterized by an additional measuring element, which is designed as a measuring bar (5) and disposed in parallel with the feed guide of the feed device (18) and whose side surface (5a) pointing toward an additional measuring device (2b) forms an additional measurement point.

6. Wire saw according to any of Claims 1 to 5, characterized by a measuring device selected from a group of distance measuring devices which operate on the basis of a mechanical, optical, hydraulic, pneumatic, capacitive or inductive measuring principle.

7. Wire saw according to any of Claims 1 to 6, characterized by a controlling device (1) selected from a group comprising piezoelectric translators, thermal rods and hydraulically, pneumatically, magnetically or mechanically operating control gears.

8. Wire saw according to any of Claims 1 to 7, characterized by bearing spindles (19) having conically tapered channels (11) for the internal cooling of the bearing spindles and of the wire guide rollers (14a) of the wire web (13a).

9. Wire saw according to any of Claims 1 to 8, characterized in that the wire guide rollers (14a) of the wire web (13a) are mounted in an axially movable manner.

10. Wire saw according to any of Claims 1 to 9, characterized by a cutting head which is mounted so as to be movable transversely to the intended cutting planes.

11. Wire saw according to any of Claims 1 to 10, characterized by a plurality of wire webs (13a) for the simultaneous machining of a plurality of workpieces.

12. Wire saw according to any of Claims 1 to 11 characterized in that the measuring element and, optionally, the wire guide rollers (14a) of the wire web (13a) are manufactured from a material whose coefficient of thermal expansion is $\alpha \leq 1.0*10^{-6}$ $K^{-1}$, in particular $\alpha \leq 0.1*10^{-6}$ $K^{-1}$.

13. Method for cutting wafers from a workpiece (10) with the aid of a wire saw having a machine frame (22), a feed device (18), a roller system combined to form a cutting head and comprising a plurality of wire guide rollers (14, 14a), at least one wire web (13a) used as sawing tool and comprising wire segments which are disposed in parallel between two wire guide rollers, and a guidance system for the guidance of the wire segments into intended cutting planes, whereby an incorrect position of the wire segments in relation to the intended cutting planes is detected with the aid of a measuring device by measuring the distance to a measurement point whose spatial position is dependent on the incorrect position of the wire segments and, in the event of a deviation of the measured distance from a set distance, a compensating movement of the wire segments or of the workpiece (10) is effected by means of force transmission with the aid of a controlling device (1), which compensating movement brings the wire segments into the intended cutting planes, characterized in that the distance to a measurement point is measured which is situated on the surface of a measuring element which is mounted either in the axial centre or axially as closely in line with the first and last wire segment of a wire guide roller of the wire web as possible.

14. Method according to Claim 13, characterized in that a compensating movement of the workpiece (10) is effected by force transmission to the workpiece (10) by the controlling device (1).

15. Method according to Claim 13, characterized in that a compensating movement of the workpiece (10) is effected by force transmission of the controlling device (1) to a housing (17) of the feed device (18).

16. Method according to any of Claims 13 to 15, characterized in that a compensating movement of the wire segments is effected by force transmission from the controlling device (1) to the wire guide roller (14a) of the wire web (13a).

17. Method according to any of Claims 13 to 15, characterized in that a compensating movement of the wire segments is effected by force transmission from the controlling device (1) to the cutting head.

18. Method according to any of Claims 13 to 17, characterized in that a compensating movement of the wire segments is effected before the start of the cutting of the wafers from the workpiece (10) and the wire segments thereby acquire a particular orientation relative to the workpiece.

19. Method according to any of Claims 13 to 18, characterized in that the set distance is varied in accordance with a predetermined programme during the cutting of the wafers from the workpiece.

20. Method according to any of Claims 13 to 19, characterized in that a feed movement is terminated after the cutting of the wafers from the workpiece and a compensating movement of the wire segments is effected the length of which is equal at least to the distance between two wire segments of the wire web (13a) and which is directed laterally.

21. Method according to any of Claims 13 to 20, characterized in that the guidance system is used for the early detection of bearing plays.

**Revendications**

1. Scie à fil pour la coupe des plaquettes d'une pièce (10) ayant un bâti de machine (22), un dispositif d'avance (18), un système de rouleaux combiné de manière à former une tête de coupe et comprenant un pluralité de rouleaux de guidage de fil (14, 14a) qui sont reliés à des broches de support (19) et qui sont montés de façon à pouvoir tourner et dont au moins un est entraîné, au moins une nappe de fils (13a) utilisée comme outil de sciage et comprenant des segments de fil qui sont disposés en parallèle entre deux rouleaux de guidage de fil (14a), qui sont déplacés perpendiculairement aux axes des rouleaux de guidage de fil autour du système de rouleaux et qui opèrent à travers la pièce (10) le long de plans de coupe prévus avec l'aide du dispositif d'avance (18), moyennant la fourniture de moyens d'érosion et avec la formation d'une multiplicité de fentes de sciage parallèles, et ayant un système de guidage servant au guidage des segments de fil dans les plans de coupe prévus ayant au moins un dispositif de mesure (2a) et au moins un dispositif de réglage (1), le dispositif de mesure (2a) détectant une position incorrecte des segments de fil par rapport aux plans de coupe prévus en mesurant la distance à partir d'un point de mesure dont la position spatiale dépend de la position incorrecte des segments de fil, et le dispositif de réglage (1) effectuant un mouvement de compensation des segments de fil ou de la pièce à l'aide d'une transmission de force, mouvement de compensation par lequel les segments de fil sont amenés dans les plans de coupe prévus, caractérisée en ce que le point de mesure est situé sur la surface d'un élément de mesure, qui est fixé soit dans le milieu axial, soit axialement de manière aussi rapprochée que possible à hauteur des premier et dernier segments de fil d'un rouleau de guidage de fil (14a) de la nappe de fils (13a).

2. Scie à fil selon la revendication 1, caractérisée par, servant d'élément de mesure, un arbre de mesure (4a) qui est centré dans la broche de support creuse (19) à l'aide d'éléments de guidage élastiques (16) et qui est monté sur le rouleau de guidage de fil (14a) de la nappe de fils (13a) en son milieu axial et dont le côté d'extrémité (4b) pointant en direction du dispositif de mesure forme le point de mesure.

3. Scie à fil selon la revendication 1, caractérisée par, servant d'élément de mesure, un arbre de mesure (4c) qui est centré dans la broche de support creuse (19) et qui est monté sur le rouleau de guidage de fil (14a) de la nappe de fils (13a) en son milieu axial et qui est fixé à un palier fixe (6) et dont le côté d'extrémité (4e) pointant en direction du dispositif de mesure (2a) forme le point de mesure.

4. Scie à fil selon la revendication 1, caractérisée par, servant d'élément de mesure, des disques de mesure (4f) qui sont fixés entre le rouleau de guidage de fil (14a) et les broches de support adjacentes de manière aussi rapprochée que possible à hauteur des premier et dernier segments de la nappe de fils (13a) et dont les surfaces latérales (4d) pointant en direction du dispositif de mesure (2a) forment le point de mesure.

5. Scie à fil selon l'une quelconque des revendications 1 à 4, caractérisée par un élément de mesure supplémentaire, qui est conçu comme une barre de mesure (5) et qui est disposé parallèlement au guide d'avance du dispositif d'avance (18) et dont la surface latérale (5a) pointant en direction d'un dispositif de mesure supplémentaire (2b) forme un point de mesure supplémentaire.

6. Scie à fil selon l'une quelconque des revendications 1 à 5, caractérisée par un dispositif de mesure sélectionné à partir d'un groupe de dispositifs de mesure de distance qui opèrent suivant un principe de mesure mécanique, optique, hydraulique, pneumatique, capacitif ou inductif.

7. Scie à fil selon l'une quelconque des revendications 1 à 6, caractérisée par un dispositif de réglage (1) sélectionné à partir d'un groupe comprenant des translateurs piézoélectriques, des barres thermiques et des engrenages de réglage fonctionnant de manière hydraulique, pneumatique, magnétique ou mécanique.

8. Scie à fil selon l'une quelconque des revendications 1 à 7, caractérisée par des broches de support (19) ayant des canaux effilés de façon conique (11) pour le refroidissement interne des broches de support et des rouleaux de guidage de fil (14a) de la nappe de fils (13a).

9. Scie à fil selon l'une quelconque des revendications 1 à 8, caractérisée en ce que les rouleaux de guidage de fil (14a) de la nappe de fils (13a) sont montés de manière à pouvoir être déplacés axialement.

10. Scie à fil selon l'une quelconque des revendications 1 à 9, caractérisée par une tête de coupe qui est montée de manière à pouvoir être déplacée transversalement par rapport aux plans de coupe prévus.

11. Scie à fil selon l'une quelconque des revendications 1 à 10, caractérisée par une pluralité de nappes de fils (13a) pour le façonnage simultané d'une pluralité de pièces.

12. Scie à fil selon l'une quelconque des revendications 1 à 11, caractérisée en ce que l'élément de mesure et, de façon éventuelle, les rouleaux de guidage de fil (14a) de la nappe de fils (13a) sont fabriqués à partir d'une matière dont le coefficient de dilatation thermique est $\alpha \leq 1{,}0*10^{-6}\,K^{-1}$, en particulier $\alpha \leq 0{,}1*10^{-6}\,K^{-1}$.

13. Procédé pour la coupe des plaquettes d'une pièce (10) avec l'aide d'une scie à fil ayant un bâti de machine (22), un dispositif d'avance (18), un système de rouleaux combiné de manière à former une tête de coupe et comprenant une pluralité de rouleaux de guidage de fil (14, 14a), au moins une nappe de fils (13a) utilisée comme outil de sciage et comprenant des segments de fil qui sont disposés en parallèle entre deux rouleaux de guidage de fil, et un système de guidage servant au guidage des segments de fil dans les plans de coupe prévus, dans lequel une position incorrecte des segments de fil par rapport aux plans de coupe prévus est détectée à l'aide d'un dispositif de mesure en mesurant la distance jusqu'à un point de mesure dont la position spatiale dépend de la position incorrecte des segments de fil, et, dans le cas d'une déviation de la distance mesurée par rapport à une distance de consigne, un mouvement de compensation des segments de fil ou de la pièce (10) est effectué au moyen d'une transmission de force à l'aide d'un dispositif de réglage (1), mouvement de compensation qui amène les segments de fil dans les plans de coupe prévus, caractérisé en ce que l'on mesure la distance jusqu'à un point de mesure qui est situé sur la surface d'un élément de mesure, qui est monté soit dans le milieu axial, soit axialement de manière aussi rapprochée que possible à hauteur des premier et dernier segments de fil d'un rouleau de guidage de fil de la nappe de fils.

14. Procédé selon la revendication 13, caractérisé en ce qu'un mouvement de compensation de la pièce (10) est effectué au moyen d'une transmission de force du dispositif de réglage (1) à la pièce (10)

15. Procédé selon la revendication 13, caractérisé en ce qu'un mouvement de compensation de la pièce (10) est effectué au moyen d'une transmission de force du dispositif de réglage (1) à un bâti (17) du dispositif d'avance (18).

16. Procédé selon l'une quelconque des revendications 13 à 15, caractérisé en ce qu'un mouvement de compensation des segments de fil est effectué au moyen d'une transmission de force du dispositif de réglage (1) au rouleau de guidage de fil (14a) de la nappe de fils (13a)

17. Procédé selon l'une quelconque des revendications 13 à 15, caractérisé en ce qu'un mouvement de compensation des segments de fil est effectué au moyen d'une transmission de force du dispositif de réglage (1) à la tête de coupe.

18. Procédé selon l'une quelconque des revendications 13 à 17, caractérisé en ce qu'un mouvement de compensation des segments de fil est effectué avant le début de la coupe des plaquettes à partir de la pièce (10) et les segments de fil acquièrent de cette manière une orientation déterminée par rapport à la pièce.

19. Procédé selon l'une quelconque des revendications 13 à 18, caractérisé en ce que la distance de consigne est modifiée suivant un programme prédéterminé pendant la coupe des plaquettes à partir de la pièce.

20. Procédé selon l'une quelconque des revendications 13 à 19, caractérisé en ce qu'un mouvement d'avance est achevé après la coupe des plaquettes à partir de la pièce et en ce qu'un mouvement de compensation des segments de fil est effectué, dont la longueur correspond au moins à la distance entre deux segments de fil de la nappe de fils (13a) et qui est dirigé latéralement.

21. Procédé selon l'une quelconque des revendications 13 à 20, caractérisé en ce que le système de guidage est utilisé pour la détection précoce de jeux dans les paliers.

## Fig. 1

Fig. 2

Fig. 2a

EP 0 733 429 B1

Fig. 3

Fig. 4